Europäisches Patentamt

European Patent Office

Office européen des brevets

(19)

(11) Publication number: **0 307 210**
**A2**

## (12) EUROPEAN PATENT APPLICATION

(21) Application number: **88308324.8**

(22) Date of filing: **09.09.88**

(51) Int. Cl.⁴: **G 11 B 21/00**
**G 11 B 9/00, G 11 B 11/00**

(30) Priority: **10.09.87 JP 227366/87**
**29.09.87 JP 245334/87**
**29.09.87 JP 245335/87**
**07.10.87 JP 253157/87**

(43) Date of publication of application:
**15.03.89 Bulletin 89/11**

(84) Designated Contracting States: **DE FR GB**

(71) Applicant: **SEIKO INSTRUMENTS INC.**
**31-1, Kameido 6-chome Koto-ku**
**Tokyo 136 (JP)**

(72) Inventor: **Ooumi, Manabu**
**Seiko Instruments Inc.31-1 Kameido 6-chome**
**Koto-ku Tokyo (JP)**

**Sakuhara, Toshihiko**
**Seiko Instruments Inc.31-1 Kameido 6-chome**
**Koto-ku Tokyo (JP)**

**Ataka, Tatsuaki**
**Seiko Instruments Inc.31-1 Kameido 6-chome**
**Koto-ku Tokyo (JP)**

(74) Representative: **Caro, William Egerton et al**
**J. MILLER & CO. Lincoln House 296-302 High Holborn**
**London WC1V 7JH (GB)**

(54) Memory writing apparatus.

(57) A memory writing apparatus comprises an input section for writing data in a memory (5), the input section comprising at least one needle (8) having a fine tip portion. A control means controls the input section, the control means comprising positioning means (3, 11, 25) for positioning the tip portion of the needle close to the surface of the memory (5), scanning means (13) for scanning the tip portion of the needle over the surface of the memory and distance controlling means (11, 12) for controlling a distance between the tip portion of the needle and the surface of the memory whilst the tip portion of the needle scans thereover.

*FIG.1*

## Description

### MEMORY WRITING APPARATUS

The present invention relates to memory writing apparatus.

Conventional memory writing apparatus employ various recording methods. In a magnetic recording method, a memory formed by coating a carrier with a magnetic powder such as acicular Co- $\gamma$ $Fe_2O_3$ is generally employed and magnetised longitudinally within its plane or magnetised perpendicular to its plane. Another type of prior art memory writing apparatus employs an optomagnetic recording method wherein the plane of a magnetic film has previously been magnetised in a predetermined direction and a laser beam is then applied to a position on the film where recording is to be effected to raise the temperature at that position, thereby inverting the direction of magnetisation.

The conventional memory writing apparatus that employ the above described recording methods suffer, however, from the following problems. Since a part of the memory writing apparatus is in physical contact with the memory, the memory cannot withstand use over long periods of time. Further, since the unit memory section is defined by a region comprising a number of atoms, achievement of higher density recording is restricted.

The present invention seeks to provide a memory writing apparatus which enables non-contact recording on an atomic or molecular scale.

According to the present invention, there is provided a memory writing apparatus characterised by comprising: an input section writing data in a memory, said input section comprising at least one needle having a fine tip portion; and control means for controlling the input section, said control means comprising positioning means for positioning the tip portion of the needle close to the surface of the memory, means for scanning the tip portion of the needle over the surface of the memory and distance controlling means for controlling a distance between the tip portion of the needle and the surface of the memory whilst the tip portion of the needle scans thereover.

Preferably the distance between the tip portion of the needle and the surface of the memory is maintained so as to cause a tunnel effect.

The needle may be manufactured by using semi-conductor processing techniques.

The positioning means may comprise an X - Y stage, a coarse control unit for positioning in an X - Y plane, and an optical micro-scope for examining the distance between the tip portion of the needle and the surface of the memory.

The distance controlling means may comprise a coarse control section and a Z-axis control section.

The invention is illustrated, merely by way of example, in the accompanying drawings, in which:-

Figure 1 schematically shows one embodiment of a memory writing apparatus according to the present invention;

Figure 2 schematically shows a modification of the memory writing apparatus of Figure 1;

Figures 3 to 7 are enlarged views of a memory of the memory writing apparatus of Figure 2;

Figure 8 shows schematically a modification of the memory writing apparatus of Figure 2;

Figures 9 to 13 are enlarged views of a memory of the memory writing apparatus of Figure 8;

Figure 14 schematically shows a further modification of the memory writing apparatus of Figure 2; and

Figures 15 to 19 are enlarged views of a memory of the memory writing apparatus of Figure 14.

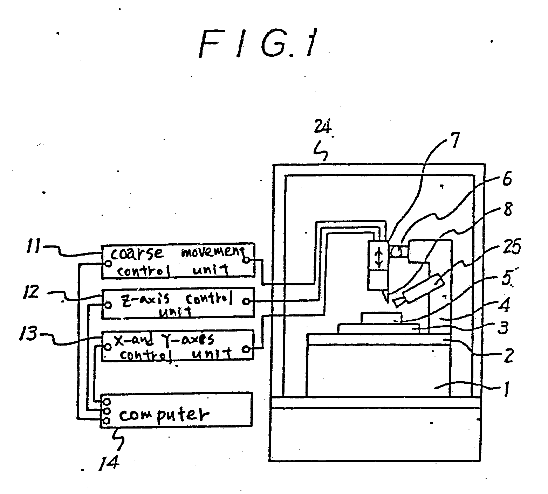

Figure 1 shows one embodiment of a memory writing apparatus according to the present invention. A needle actuating unit 7 is secured to an arm 4 which is rigidly secured to a surface plate 2 mounted on an anti-vibration mounting 1. The needle actuating unit 7 can be moved vertically by turning a dial 6 and therefore can be used to effect coarse positioning of a memory 5 and an electrically conductive needle 8 in the Z-axis direction. Coarse positioning in the X - Y plane of the memory 5 is controlled by means of a stage 3 and a coarse control unit 11. An optical micro-scope 25 can be used in coarse alignment of the needle 8 and the memory 5. Scanning in the X - Y plane direction is effected by controlling a three dimensional piezoelectric device incorporated in the needle actuating unit 7 by the operation of an X- and Y-axis control unit 13. A predetermined voltage within a range of from 1 to 100 mV is applied between the memory 5 and the needle 8 thereby to effect writing on the memory 5.

The coarse control unit 11, Z-axis control unit 12 and X- and Y-axis control unit 13 are controlled by a computer 14. For example, the computer 14 may be arranged to control the coarse movement control unit 11 and the Z-axis control unit 12 in response to a tunnel effect occurring between the tip portion of the needle 8 and the surface of the memory. The whole apparatus, except for the power supply, the control units 11, 12, 13, and the computer 14 is installed within a shielding box 24.

In the memory writing apparatus, the stage 3, supporting the memory 5, the coarse movement control unit 11 and the optical micro-scope 25 constitute positioning means for positioning the tip portion of the needle 8 close to the surface of a memory 5. Scanning means for scanning the tip portion of the needle over the surface of the memory comprises the X- and Y-axis control unit 13. Distance controlling means for controlling the distance between the tip portion of the needle and the surface of the memory while the tip portion of the needle scans thereover, comprises the coarse movement control unit 11 and a Z-axis control unit 12. The needle 8 is scanned in the X-axis and Y-axis directions on the X - Y surface of the memory 5 to measure the tunnel current.

A dielectric material may be used as the memory 5. The needle 8 is brought close to one atom of the dielectric material on the surface of the memory 5 to apply a voltage and thereby polarise it. Then, the needle 8 is moved in the X- or Y-axis direction on the X - Y plane of the memory 5 to apply a voltage to an atom at that position so as to polarise it in the same manner as above. In this way, memory writing on an atomic scale is achieved.

A polar compound may be used as the memory 5. If a polar compound is present on the surface of the memory 5, application of a voltage causes a molecule of the compound to rotate along the direction of the electric field. Then, the needle 8 is moved in the X- or Y-axis direction on the X - Y plane and a voltage is similarly applied thereto, thereby rotating the polar compound molecule at that position. Thus, memory writing on a molecular scale is achieved.

A liquid crystal compound may be used for the memory 5. When a voltage is applied to a liquid crystal compound, the direction of its molecules changes. Thus, the needle 8 is brought close to one molecule of the liquid crystal compound and a voltage is applied to the needle 8, thereby to change the direction of the molecule. Then, the needle 8 is moved in the X- or Y-axis direction on the X - Y plane of the memory 5 and a voltage is similarly applied thereto, thereby changing the direction of the liquid crystal molecule at that position. Thus, memory writing on a molecular scale is achieved.

A multi-valent element, i.e. one that can exhibit two or more valencies, may be used as the memory 5. When a voltage is applied to an atom of a multi-valent element, the number of electrons thereof changes. Thus, the needle 8 is brought close to one atom of the multi-valent element constituting the memory 5 and a voltage is applied thereto, thereby to cause a tunnel effect, thus changing the number of electrons of the atom. Then, the needle 8 is moved in the X- or Y-axis direction on the X - Y plane of the memory 5 and a voltage is similarly applied thereto, thereby causing a tunnel effect and thus changing the number of electrons of the atom at that position. In this way, memory writing on an atomic scale is achieved.

An electro-chromic material may be used as the memory 5. When a voltage is applied to a molecule of an electro-chromic material, the wavelength of absorbance thereof changes. Thus, the needle 8 is brought close to one molecule of such a material and a voltage is applied thereto, thereby causin a tunnel effect and thus effecting writing on the memory. Then, the needle 8 is moved in the X- or Y-axis direction on the X - Y plane of the memory 5 and a voltage is similarly applied thereto, thereby causing a tunnel effect and thus changing the wavelength of absorbance of the molecule at that position. In this way, memory writing on a molecular scale is achieved.

A polar compound immersed in a polar solvent may be used as the memory 5. The surface of the memory 5 comprises a polar compound placed in a polar solvent, the polar compound being ionised. Accordingly, the surface of the memory 5 may be considered to be weakly electrified. If a tunnel effect is caused by bringing the needle 8 close to each molecule of the polar compound, the electric charge is removed. Thus, memory writing on a molecular scale is achieved.

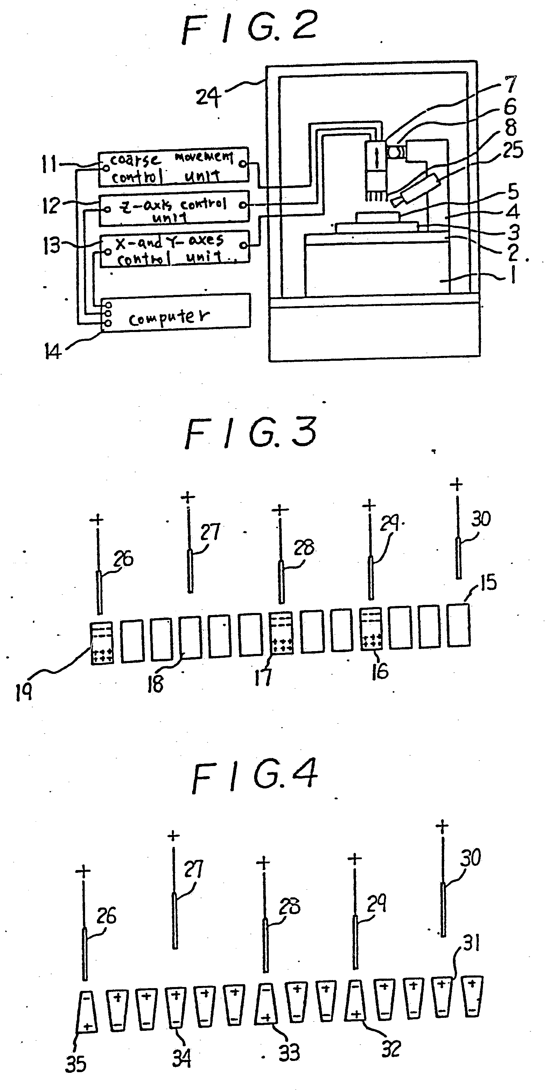

Figure 2 shows a modification of the memory writing apparatus of Figure 1. Instead of a single needle 8, there are a plurality of needles each having a minutely shaped tip portion. These needles are actuated independently of each other, thereby to effect memory writing.

Figure 3 shows dielectric material used as the memory 5. The needles 26, 28, 30 are brought close to atoms 19, 17, 15, which are present on the surface of the memory 5 to apply a voltage and thereby polarise them. Needles 27, 30 are not brought close to the respective atoms 18, 15 so are not polarised. Then, the needles are moved in the X- or Y-axis direction on the X - Y plane of the memory 5 and only the needles which are above the positions that need writing are brought close to the atoms of the dielectric material in the manner described above, thereby polarising only atoms at said positions. In this way, memory writing on an atomic scale is achieved.

Figure 4 illustrates a polar compound used as the memory 5. When a voltage is applied to molecules 32, 33, 35 of the polar compound by needles 29, 27, 26 respectively, the molecules rotate along the direction of the electric field. The needles 27, 30 are not brought close to the molecules 34, 31 respectively and thus do not rotate. Then, the needles are moved in the X- or Y-axis direction on the X - Y plane and only the needles which are above the positions that need writing are brought close to the molecules of the polar compound concerned in the same manner as above, thereby rotating only the molecules at said positions. In this way, memory writing on a molecular scale is achieved.

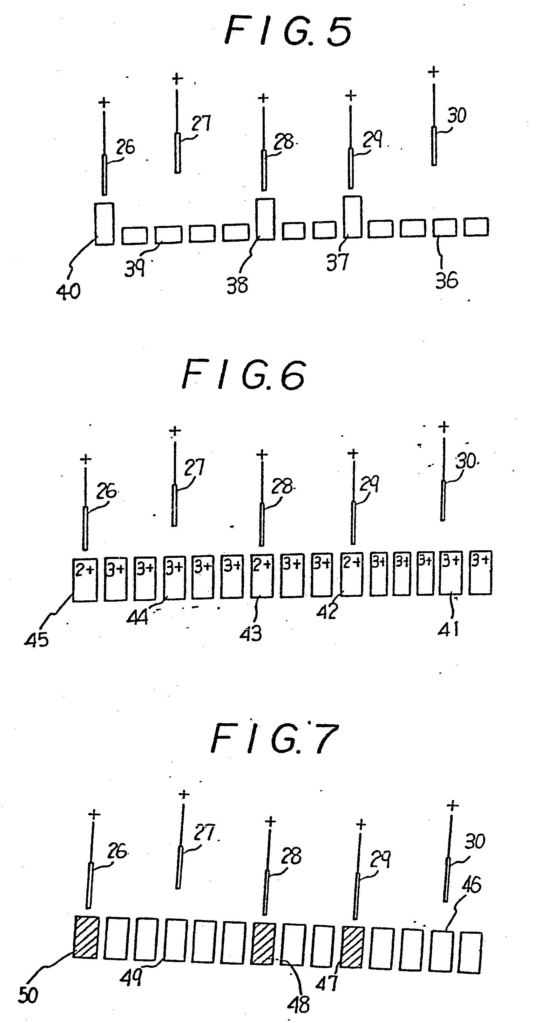

Figure 5 illustrates a liquid crystal compound used as the memory 5. When a voltage is applied to the liquid crystal compound, the direction of its molecules changes. Needles 26, 28, 30 are brought close to respective molecules 36, 38, 40 of the liquid crystal compound constituting the memory 5, and a voltage is applied thereto, thereby to change direction of the liquid crystal molecules. Needles 27, 30 are not brought close to respective molecules 39, 36 and thus do not change their direction. Then, the needles are moved in the X- or Y-axis direction on the X - Y plane and those which are above the positions that need writing are brought close to the liquid crystal molecules concerned in the same manner as above, thereby changing the direction of only the molecules at said positions. In this way, memory writing on a molecular scale is achieved.

Figure 6 illustrates a multi-valent element used as the memory 5. When a voltage is applied to an atom of a multi-valent element, the number of electrons thereof changes. Needles 26, 28, 29 are brought close to respective atoms 45, 43, 42 of the multi-valent element and a voltage is applied thereto, causing a tunnel effect and thus changing the number of electrons of the atoms. Needles 27, 30 are not brought close to respective atoms 44, 41 and so there is no change in the number of electrons thereof. Then, the needles are moved in the X- or Y-axis direction on the X - Y plane and only the needles which are above the positions that need writing are brought close to the atoms concerned in the same manner as above, thereby causing a tunnel effect and thus changing the number of electrons of the atoms at said positions. In this way, memory writing on an atomic scale is achieved.

Figure 7 illustrates an electro-chromic material employed as the memory 5. When a voltage is applied to a molecule of an electro-chromic material, the wavelength of absorbance thereof changes. Needles 26, 28, 29 are brought close to molecules 47, 48 and 50 respectively of such an electro-chromic material and a voltage is applied thereto, thereby causing a tunnel effect and thus effecting memory writing. Needles 27, 30, which are not brought close to molecules 49, 46 respectively, cause no change in the wavelength of absorbance. Then, the needles are moved in the X- or Y-axis direction on the X - Y plane and only the needles which are above the positions that need writing are brought close to the memory 5, thereby causing a tunnel effect and thus changing the wavelength of absorbance of the molecules at said positions. In this way, memory writing on a molecular scale is achieved.

Similarly, although not illustrated, the memory 5 may be a polar compound immersed in a polar solvent and may be considered to be weakly electrified. The needles 8 are brought close to molecules, respectively, of the polar compound and a voltage is applied thereto, thereby causing a tunnel effect and thus effecting memory writing. The molecules of the polar compound under the respective needles 8 which are not brought close thereto experience no change in the amount of electric charge. Then, the needles are moved in the in the X- or Y-axis direction on the X - Y plane and only the needles which are above the positions that need writing are brought close to the memory 5, in the same manner as above, thereby causing a tunnel effect and thus achieving memory writing on a molecular scale.

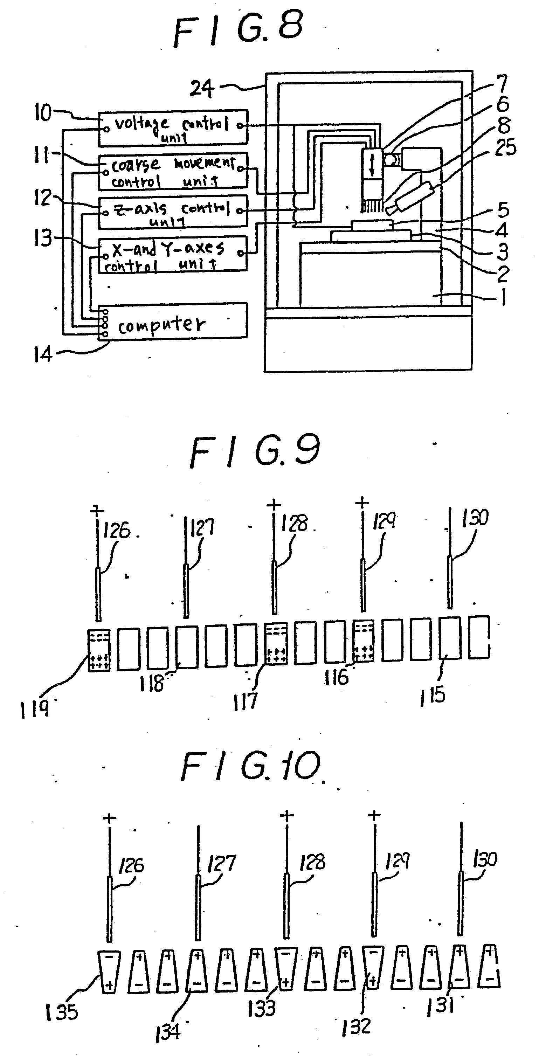

Figure 8 shows a modification of the memory writing apparatus of Figure 2, having needles each with a minutely shaped tip portion, the voltages applied to these needles being controlled independently of each other, thereby to effect memory writing. To this end, a voltage control unit 10 is provided and controlled by the computer 14.

Figure 9 shows dielectric material used as the memory 5. Needles 126, 128, 129 are brought close to atoms 119, 117, 116 respectively of the dielectric material which are present on the surface of the memory 5 to apply a voltage and thereby polarise them. The needles 127, 130 to which no voltage is applied do not polarise respective atoms 118, 115. Then, the needles are moved in the X- or Y-axis direction on the X - Y plane and a voltage is applied to only the needles which are above the positions that need writing in the same manner as above, thereby polarising only atoms at said positions. In this way, memory writing on an atomic scale is achieved.

Figure 10 illustrates a polar compound used as the memory 5. When a voltage is applied to molecules 132, 133, 135 of the polar compound by respective needles 129, 128 and 126, the molecules rotate along the direction of the electric field. The needles 127, 130 to which no voltatge is applied do not cause respective molecules 134, 131 to rotate. Then, the needles are moved in the X- or Y-axis direction on the X - Y plane and a voltage is applied to only the needles which are above the positions that need writing in the same manner as above, thereby rotating only the molecules at said positions. In this way, memory writing on a molecular scale is achieved.

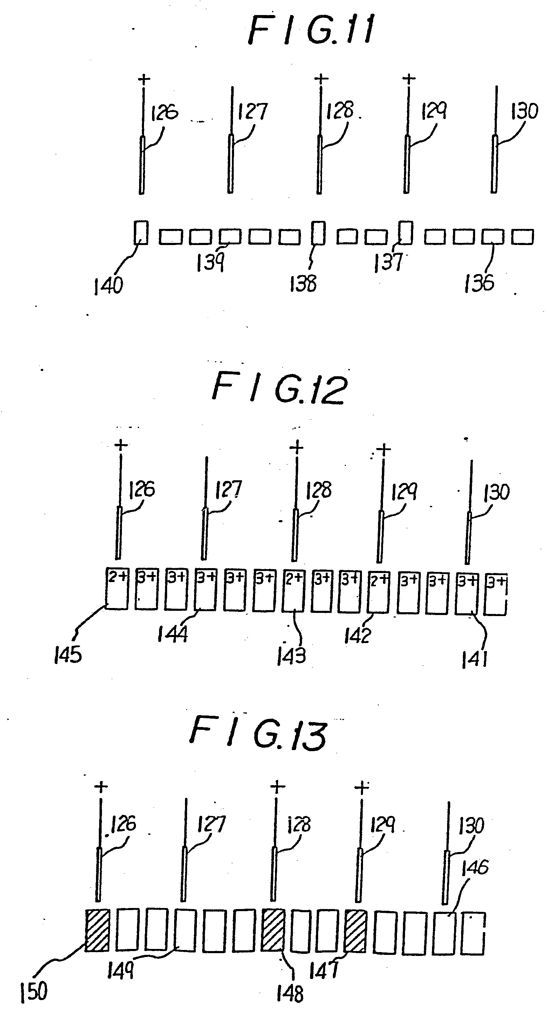

Figure 11 illustrates a liquid crystal compound used as the memory 5. When a voltage is applied to the liquid crystal compound, the direction of its molecules changes. Needles 126, 128, 129 are brought close to molecules 140, 138, 137 respectively of the liquid crystal compound constituting the memory 5, and a voltage is applied thereto, thereby to change the direction of the liquid crystal molecules. The needles 127, 130 to which no voltage is applied do not cause molecules 139, 136 respectively to change their direction. Then, the needles are moved in the X- or Y-axis direction on the X - Y plane and a voltage is applied to only the needles which are above the positions that need writing in the same manner as above, thereby changing the direction of only the molecules at said positions. In this way, memory writing on a molecular scale is achieved.

Figure 12 illustrates illustrates a multi-valent element used as the memory 5. When a voltage is applied to an atom of a multi-valent element, the number of electrons thereof changes. Needles 126, 128, 129 are brought close to atoms 145, 143, 142 respectively, of the multi-valent element constituting the memory 5, and a voltage is applied thereto, thereby causing a tunnel effect and thus changing the number of electrons of the atoms. Needles 127, 130 to which no voltage is applied do not cause any change in the number of electrons of respective atoms 144, 141. Then, the needles are moved in the X- or Y-axis direction on the X - Y plane and a voltage is applied only to the tips which are above the positions that need writing in the same manner as above, thereby causing a tunnel effect and thus changing the number of electrons of the atoms at said positions. In this way, memory writing on an atomic scale is achieved.

Figure 13 illustrates an electro-chromic material used as the memory 5. When a voltage is applied to a molecule of an electro-chromic material, the wavelength of absorbance thereof changes. Needles 126, 128, 129 are brought close to molecules 150, 148, 147 respectively of such an electro-chromic material and a voltage is applied thereto, thereby causing a tunnel effect and thus effecting memory writing. Needles 127, 130 to which no voltage is applied do not cause any change in the wavelength of absorbance of molecules 149, 146 respectively. Then, the needles are moved in the X- or Y-axis direction on the X - Y plane and and a voltage is applied to only the needles which are above the positions that need writing in the same manner as above, thereby causing a tunnel effect and thus changing the wavelength of absorbance of the molecules at said positions. In this way, memory writing on a molecular scale is achieved.

Similarly, although not illustrated, the memory 5 may be a polar compound immersed in a polar solvent and may be considered to be weakly electrified. Electrically conductive needles 8 are brought close to molecules of the polar compound and a voltage is applied thereto, thereby causing a tunnel effect and thus effecting memory writing. The molecules of the polar compound under the respective needles 8 to which no voltage is applied have no change in the amount of the electric charge. Then, the needles are moved in the X- or Y-axis direction on the X - Y plane and a voltage applied to only the needles which are above the positions that need writing in the same manner as above, thereby causing a tunnel effect and thus achieving memory writing on a molecular scale.

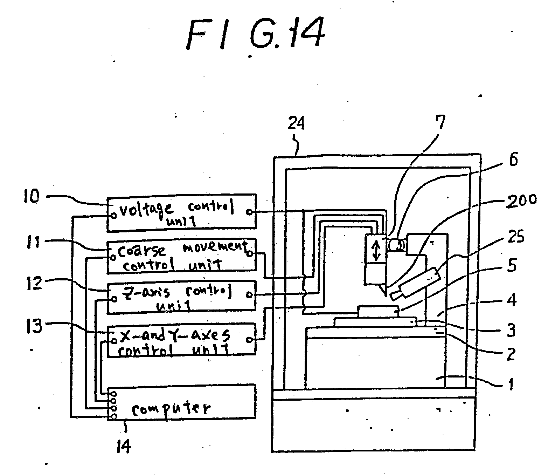

Figure 14 shows a further modification of the memory writing apparatus of Figure 2. Instead of the needle 8 in Figure 14, a needle-shaped 200 is comprised of a semi-conductor substrate having conductive and insulating portions alternately disposed on the plane thereof. An electrically conductive needle whose tip portion comprises one to several atoms is connected to each conductive portion. The needle device 200 may be produced by miniaturising a conductive layer grown on the semi-conductor substrate by an etching process. Voltages respectively applied to the conductive portions can be controlled independently of each other.

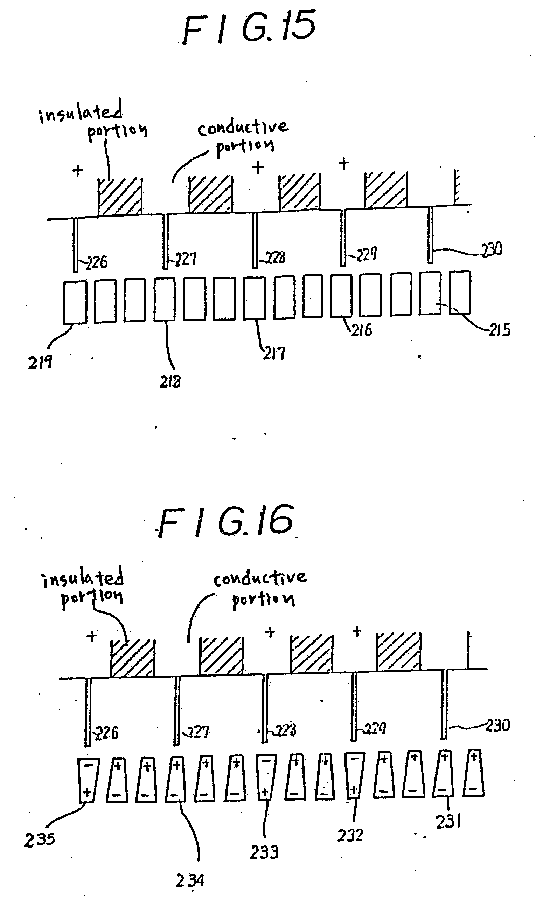

Figure 15 is an enlarged view of part of the needle-shaped device 200 of the memory 5 which is composed of dielectric material. Fine conductive needles 226, 228, 229 connected to the respective conductive portions of the needle-shaped device 200 are brought close to atoms 219, 217, 216 of dielectric material present on the surface of the memory 5 and a voltage is applied thereto to polarise them. Atoms 218, 215 under the respective needles 227, 230, to which no voltage is applied, are not polarised. Then the needle-shaped device 200 is moved in the X- or Y-axis direction on the X - Y plane and a voltage is applied to only the needles which are above the positions that need writing in the same manner as above, thereby polarising only the atoms at said positions. In this way, memory writing on an atomic scale is achieved.

Figure 16 illustrates a polar compound used as the memory 5. When a voltage is applied to molecules 231 to 235 of the polar compound constituting the memory 5, the molecules rotate along the direction of the electric field. Fine needles 226, 228, 229 respectively connected to the conductive portions of the needle-shaped device 200 are brought close to the molecules 235, 233, 232 respectively of the polar compound on the surface of the memory 5 and a voltage is applied thereto to rotate these polar compound molecules. Molecules 234, 231 under the respective needles 227, 230 to which no voltage is applied do not rotate. Then, the needle-shaped device 200 is moved in the X- or Y-axis direction on the X - Y plane and a voltage is applied to only the needles which are above the positions that need writing in the same manner as above, thereby rotating only the molecules at said positions. In this way, memory writing on a molecular scale is achieved.

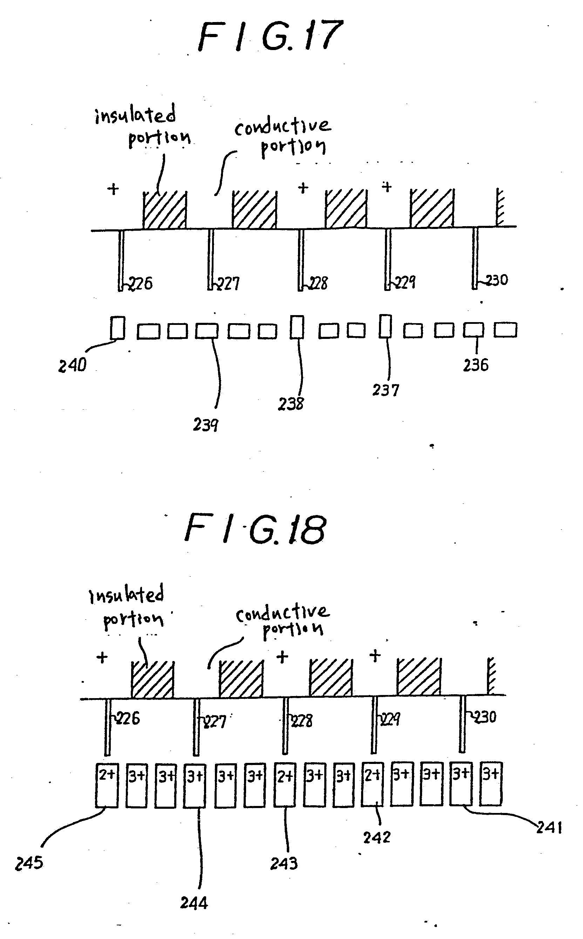

Figure 17 illustrates a liquid crystal compound used as the memory 5. When a voltage is applied to the liquid crystal compound, the direction of its molecules changes. Fine needles 226, 228, 229 which are respectively connected to the conductive portions of the needle-shaped device, are brought close to molecules 240, 238, 237 respectively of the liquid crystal compound constituting the memory 5, and a voltage is applied thereto, thereby to change the direction of the liquid crystal molecules. The molecules 239, 236 under the respective needles 227, 230 to which no voltage is applied do not change their direction. Then, the needle-shaped device 200 is moved in the X- or Y-axis direction on the X - Y plane and a voltage is applied to only the tips which are above the positions that need writing in the same manner as above, thereby changing the direction of only the molecules at said positions. In this way, memory writing on a molecular scale is achieved.

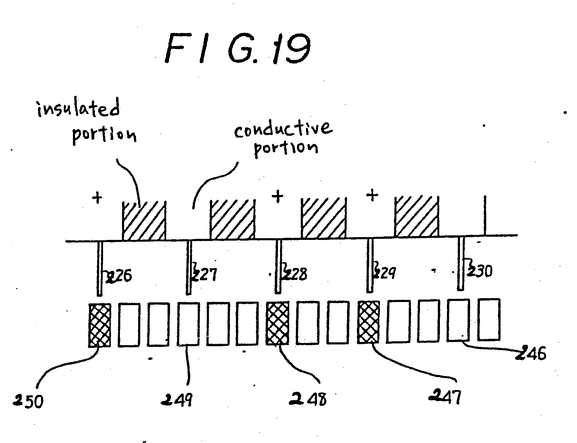

Figure 18 illustrates a multi-valent element used as the memory 5. When a voltage is applied to an atom of a multi-valent element, the number of electrons thereof changes. Fine needles 226, 228, 229 which are respectively connected to the conductive portion of the needle-shaped device 200 are brought close to atoms 245, 243, 242 respectively, of the multi-valent element constituting the memory 5, and a voltage is applied thereto, thereby causing a tunnel effect and thus changing the number of electrons of the atoms. Atoms 244, 241 under respective needles 227, 230 to which no voltage is applied have no change in the number of electrons thereof. Then, the needle shaped device 200 is moved in the X- or Y-axis direction on the X - Y plane and a voltage is applied only to the needles which are above the positions that need writing in the same manner as above, thereby causing a tunnel effect and thus changing the number of electrons of the atoms at said positions. In this way, memory writing on an atomic scale is achieved.

Figure 19 illustrates electro-chromic material used as the memory 5. When a voltage is applied to a molecule of an electro-chromic material, the wavelength of absorbance thereof changes. Fine needles 226, 228, 229 which are respectively connected to the conductive portions of the needle-shaped device 200 are brought close to molecules 250, 248, 247, respectively, of an electro-chromic material and a voltage is applied thereto, thereby causing a tunnel effect and thus effecting memory writing. Molecules 249, 246 under the respective needles 227, 230 to which no voltage is applied have no change in the wavelength of absorbance. Then, the needle-shaped device 200 is moved in the X- or Y-axis direction on the X - Y plane and and a voltage is applied to only the needles which are above the positions that need writing, thereby causing a tunnel effect and thus changing the wavelength of absorbance of the molecules at said positions. In this way, memory writing on a molecular scale is achieved.

Similarly, although no illustrated, the memory 5 may be a polar compound immersed in a polar solvent and may be considered to be weakly electrified. Needles each having a fine and electrically conductive tip portion, which are respectively connected to the conductive portions of the needle-shaped device 200, are brought close to molecules of the polar compound and a voltage is applied thereto, thereby causing a tunnel effect and thus effecting memory writing. The polar compound molecules under the respective needles to which no voltage is applied have no change in the amount of the electric charge. Then, the needle-shaped device 200 is moved in the X- or Y-axis direction on the X - Y plane and a voltage is applied to only the needles which are above the positions that need writing in the same manner as above, thereby causing a tunnel effect and thus achieving memory writing on a molecular scale.

## Claims

1. A memory writing apparatus characterised by comprising: an input section writing data in a memory (5), said input section comprising at least one needle (8, 200) having a fine tip portion; and control means for controlling the input section, said control means comprising positioning means (3, 11, 25) for positioning the tip portion of the needle close to the surface of the memory (5), means (13) for scanning the tip portion of the needle over the surface of the memory and distance controlling means (11, 12) for controlling a distance between the tip portion of the needle and the surface of the memory whilst the tip portion of the needle scans thereover.

2. A memory writing apparatus as claimed in claim 1 characterised in that the distance between the tip portion of the needle (8, 200) and the surface of the memory (5) is maintained so as to cause a tunnel effect.

3. A memory writing apparatus as claimed in claim 1 or 2 characterised in that the needle (200) is manufactured by using semi-conductor processing techniques.

4. A memory writing apparatus as claimed in any preceding claim characterised in that a dielectric material is used as the memory (5).

5. A memory writing apparatus as claimed in any of claims 1 to 3 characterised in that a polar compound is used as the memory (5).

6. A memory writing apparatus as claimed in any of claims 1 to 3 characterised in that a liquid crystal compound is used as the memory (5).

7. A memory writing apparatus as claimed in any of claims 1 to 3 characterised in that a multi-valent element is used as the memory (5).

8. A memory writing apparatus as claimed in any of claims 1 to 3 characterised in that an electro-chromic material is used as the memory (5).

9. A memory writing apparatus as claimed in any of claims 1 to 3 characterised in that a polar compound which is immersed in a polar solvent is used as the memory (5).

10. A memory writing apparatus as claimed in any preceding claim characterised in that the positioning means comprises an X - Y stage (3), a coarse control unit (11) for positioning in an X - Y plane, and an optical micro-scope (25) for examining the distance between the tip portion of the needle (8, 200) and the surface of the memory (5).

11. A memory writing apparatus as claimed in any preceding claim characterised in that the distance controlling means comprises a coarse control section (11) and a Z-axis control section (12).

# FIG.1

# F I G. 2

coarse movement control unit — 11

z-axis control unit — 12

X-and Y-axes control unit — 13

computer — 14

24

7
6
8
25
5
4
3
2
1

# F I G. 3

26
27
28
29
30

19
18
17
16
15

# F I G. 4

26
27
28
29
30

31

35
34
33
32

# F I G. 5

40 39 38 37 36

26 27 28 29 30

# F I G. 6

26 27 28 29 30

|2+|3+|3+|3+|3+|3+|2+|3+|3+|2+|3+|3+|3+|3+|3+|

45 44 43 42 41

# F I G. 7

26 27 28 29 30

46

50 49 48 47

# FIG. 8

10 voltage control unit
11 coarse movement control unit
12 z-axis control unit
13 X-and Y-axes control unit
14 computer

24
7
6
8
25
5
4
3
2
1

# FIG. 9

126 127 128 129 130

119 118 117 116 115

# FIG. 10

126 127 128 129 130

135 134 133 132 131

# F I G.11

# F I G.12

# F I G.13

# F I G. 14

# F I G.15

insulated portion

conductive portion

# F I G.16

insulated portion

conductive portion

EP 0 307 210 A2

# F I G. 17

insulated portion

conductive portion

240   239   238   237   236

# F I G. 18

insulated portion

conductive portion

245   244   243   242   241

# F I G. 19

insulated
portion

conductive
portion